# FASCICULE DE BREVET EUROPEEN

(11) **EP 2 079 216 B1**
(45) Date de publication et mention de la délivrance du brevet: **25.05.2011**
(21) Numéro de dépôt: 08168458.1
(22) Date de dépôt: 06.11.2008
(51) Int. Cl.: H04L 29/06

(54) **Mémorisation d'informations contextuelles entre transmissions de messages de signalisation**
Speicherung von Kontextinformationen zwischen Übertragungen von Zeichengabenachrichten
Memorisation of contextual information between transmissions of signalling messages

(30) Priorité: 09.01.2008 FR 0850096
(43) Date de publication de la demande: 15.07.2009
(73) Titulaire: Alcatel Lucent, 75008 Paris (FR)
(72) Inventeur: Froment, Thomas, 91620 Nozay (FR); Bourget, Yannick, 91620 Nozay (FR)
(74) Mandataire: Chaffraix, Sylvain

(56) Documents cités:
- BJORKNER J ET AL: "Service Route Header extension; draft-bjorkner-sip-serviceroute-00.txt" IETF STANDARD-WORKING-DRAFT, INTERNET ENGINEERING TASK FORCE, IETF, CH, 1 septembre 2001 (2001-09-01), XP015010898 ISSN: 0000-0004

## Description

La présente invention est relative à la signalisation dans un réseau de communication de données. Elle concerne plus particulièrement la transmission de données contextuelles entre les différents acteurs de cette signalisation dans le cadre du protocole SIP (« *Session Initiation Protocol* ») défini par le RFC 3261 de l'IETF (*Internet Engineering Task Force*).

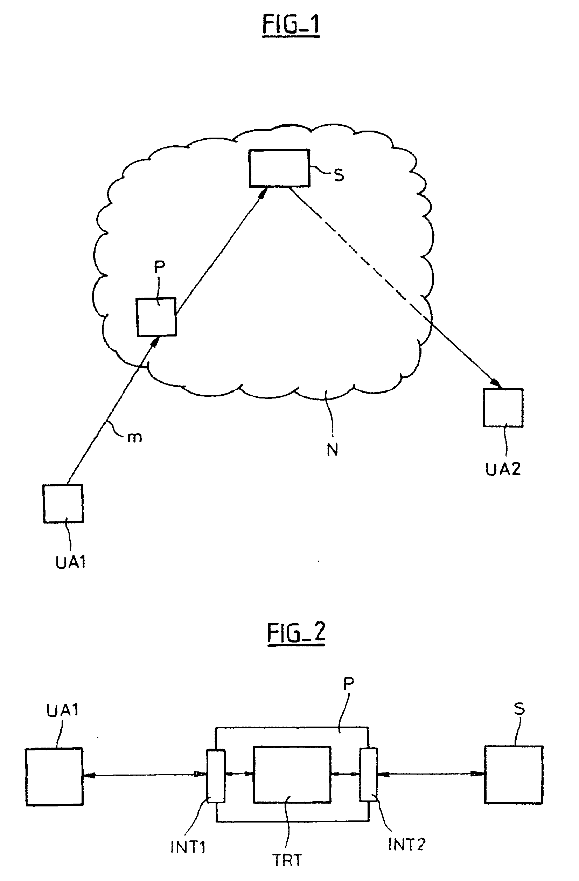

La figure 1 schématise une architecture simplifiée mettant en oeuvre le protocole SIP. Deux agents de communication UA1 et UA2, par exemple des terminaux, sont connectés entre eux par un réseau de communication N. Ils peuvent être connectés par une chaîne d'éléments de signalisation qui permettent d'acheminer les messages de signalisation entre les deux agents UA1 et UA2.

Ces éléments de signalisation peuvent être des « *proxies* » ou des B2BUA (« *Back to Back User Agent* »), tels que définis par le RFC 3261.

L'élément de signalisation P joue le rôle de « *outbound proxy* » pour l'agent UA1. Les messages de signalisation m émis par l'agent UA1 sont reçus par cet élément de signalisation P, quelque soit la destination indiquée dans le message. Il peut être configuré manuellement ou automatiquement au sein de l'agent UA1 et joue le rôle de point d'entrée au réseau de communication N pour l'agent UA1.

L'élément de signalisation P transmet alors le message de signalisation m vers un élément de signalisation S jouant le rôle de « *Registrar* » et dont un des buts est de mémoriser les informations relatives à l'agent UA1 et à son utilisateur. Il détermine ensuite les informations permettant d'acheminer le message de signalisation m vers l'agent de communication destinataire UA2, à travers d'autres éléments de signalisation non représentés (parmi ceux-ci, un élément de signalisation « outbound proxy » pour l'agent UA2).

Dans le cadre d'une architecture IMS (« *IP Multimedia Subsystem* ») conforme aux travaux des organismes de standardisation 3GPP et Tispan, l'élément de signalisation P peut être un élément P-CSCF (« *Proxy - Call Session Control Function* ») et l'élément de signalisation peut être un élément S-CSCF (« *Serving - Call Session Control Function* »).

Le protocole SIP défini plusieurs types de messages de signalisation.

Les messages de signalisation d'enregistrement, « Register », permettent d'enregistrer un agent de communication à un réseau de communication et de mémoriser au sein du réseau, les informations nécessaires pour qu'un message destiné à son utilisateur soit acheminé vers lui.

Il existe en outre des messages de signalisation initiaux comme « Invite », « Message », « Subscribe », « Notity », « Publish »... permettant l'établissement de session de communication multimedia, de messagerie instantanée « Instance Messaging », des applications de présence etc.

Certains de ces messages de signalisation initiaux débutent un dialogue de signalisation identifiée par la valeur des entêtes « Call Id », « From » et « To » contenus dans ces messages. Les messages de signalisation survenant en réponse de ces messages initiaux contiennent les mêmes valeurs pour ces entêtes et appartiennent donc ou même dialogue de signalisation. Ces messages de signalisation de réponse peuvent par exemple être des messages de la série « 2xx ». Cette notion de dialogue est spécifiée dans le paragraphe 12 du RFC 3261.

D'autres messages de signalisation initiaux ne débutent pas de dialogue. C'est le cas des messages « Message », « Publish »... Seul un message de réponse suit ce message initial, et il n'y a pas de dialogue au sens où il n'y a pas de messages subséquents (i.e. contenant le même entête « call-Id »).

Tous ces messages de signalisation comportent des entêtes contenant des informations utiles pour leur acheminement au sein du réseau de communication N, définis soit dans le RFC 3261 soit dans les RFC subséquents qui sont venus enrichir le protocole SIP.

D'une façon générale, ces informations ne sont pas mémorisées par les éléments de signalisation. Ceux-ci ne font que les transmettre le long de la chaîne et, lorsqu'un message de réponse revient, ils ne peuvent disposer que des informations contenues dans celui-ci pour les traiter. Ces éléments de signalisation sont dits « sans états » (« stateless »), c'est-à-dire que le traitement d'un message de signalisation n'y provoque pas la création d'un état, ou d'un contexte.

Or, il peut être utile dans certains cas de pouvoir bénéficier d'un comportement « à états » (« stateful ») pour certaines données, c'est-à-dire que certaines données contextuelles puissent être disponibles pour les éléments de signalisation afin d'y instaurer un état donné.

Par exemple, si un agent de communication s'enregistre en précisant qu'il veut utiliser le protocole sécurisé IPSEC, cette information doit idéalement être conservée par l'élément de signalisation P (« *outbound proxy* ») afin d'utiliser ce mécanisme également pour les messages de signalisation subséquents (par exemple, un message d'invitation « Invite » survenant plusieurs minutes ou heures plus tard).

La standardisation elle-même prévoit que certaines données liées au dialogue soient mémorisées par les éléments de signalisation partie-prenante au dialogue. Toutefois, cette mémorisation et l'état créé dans les éléments de signalisation ne survivent pas au-delà du dialogue. Autrement dit, les informations transmises lors de l'enregistrement de l'agent seront mémorisées en liaison à un état jusqu'à la transmission d'un message de réponse « 200 Ok » mettant un terme au dialogue.

Un nouveau message de signalisation de la part du client, par exemple un message d'invitation « Invite » ou un message « Subscribe » ou « Refer », possède une nouvelle valeur pour l'entête « Coll-ID » et débute un nouveau dialogue, distinct du précédent. Les états et données contextuelles mémorisés pendant le dialogue précédent ne sont donc plus disponibles, et notamment, par exemple, l'indication d'utilisation du mécanisme IPSEC.

Il en est de même des données transmises par les messages « individuels », c'est-à-dire par les messages initiaux ne créant pas de dialogue, comme les messages « Message » ou « Register » : ces informations ne peuvent être mémorisées que jusqu'à la réception du message de réponse.

Il pourrait être envisagé de rendre ces informations persistantes au-delà de la terminaison d'un dialogue, ou au delà du message de réponse d'un message « individuel », et de développer des mécanismes permettant de lier des messages en fonction de leur appartenance à une même session applicative. Ces informations pourraient alors être stockées au sein de l'élément de signalisation lui-même ou bien déportées sur un serveur centralisé.

Toutefois, compte tenu du grand nombre d'agents susceptibles d'être connectés à un même élément de signalisation de type « *outbound proxy* », une telle approche provoquerait des problèmes de ressources et de performance du système.

En effet, les éléments de signalisation seraient obligés alors de mémoriser un grand nombre d'information pendant une période de temps indéfinie. En outre, afin de procurer une haute disponibilité, ces informations devraient nécessairement être dupliquées sur d'autres serveurs, ajoutant ainsi aux besoins en mémoire et au trafic de données dans le réseau de communication.

Le document "Service Route Header Extension" de J. Bjorkner et al. de septembre 2001 décrit un élément de signalisation qui garde les données contextuelles.

Le but de la présente invention est donc de permettre aux éléments de signalisation, notamment de type « *outbound proxy* », de disposer de données contextuelles sans pour autant surcharger le réseau de communication N, et notamment les éléments de signalisation P, S, par la mémorisation de ces données contextuelles.

Pour ce faire, l'invention a pour objet un élément de signalisation disposant
- d'une première interface permettant l'échange de messages de signalisation avec un agent de communication,
- d'une seconde interface permettant l'échange de messages de signalisation avec un autre élément de signalisation, ces messages de signalisation étant conformes au protocole SIP, et
- d'un moyen de traitement pour modifier des entêtes des messages de signalisation reçus sur l'une des interfaces avant retransmission à partir de l'autre de ces deux interfaces.

L'élément de signalisation selon l'invention est novateur en ce que le moyen de traitement est prévu pour :
- à la réception d'un message de signalisation d'enregistrement sur la première interface, copier les données contextuelles dans l'entête « path » du message de signalisation transmis à partir de la seconde interface ;
- à la réception d'un message de signalisation sur la seconde interface formant réponse au message de signalisation d'enregistrement, copier les données contextuelles contenues dans l'entête « Path » de celui-ci vers le premier entête « Service-Route » du message de signalisation transmis à partir de la première interface ;
- à la réception d'un message de signalisation initial sur l'une des deux interfaces, copier les données contextuelles contenues dans un entête «Route» vers un entête «Record-Route» du message de signalisation transmis à partir de l'autre des interfaces.

Selon différentes mises en oeuvre de l'invention, les données contextuelles peuvent contenir :
- un identificateur d'un réseau de communication auquel l'élément de signalisation est connecté ;
- des informations nécessaires pour la traversée d'équipements de traduction d'adresses, notamment de type NAT ;
- des informations relatives au mécanisme IPSEC, etc.

Ainsi, par l'insertion de ces données contextuelles dans des entêtes soigneusement déterminés des messages de signalisation, l'élément de signalisation peut y avoir accès lors de la réception d'un nouveau message de signalisation. Ces données contextuelles sont accessibles même si le nouveau message n'appartient pas au dialogue ayant permis l'acquisition de ces données, et sans que l'élément de signalisation ait besoin de les mémoriser lui-même ou de les stocker dans un serveur centralisé.

Ce résultat est atteint grâce à des mécanismes du protocole SIP qui standardisent le contenu de chaque entête et le comportement de chaque acteur de la signalisation vis-à-vis de ces entêtes.

La façon dont ce résultat est atteint, ainsi que les avantages de la présente invention, apparaîtront de façon plus claire dans la description qui va suivre en liaison avec les figures annexées.
La figure 1 déjà commentée représente une architecture simplifiée mettant en oeuvre le protocole SIP.
La figure 2 illustre de façon très schématique l'architecture fonctionnelle d'un élément de signalisation.
La figure 3 schématise un dialogue d'enregistrement d'un agent de communication auprès d'un réseau de communication.
La figure 4 schématise un dialogue subséquent dans lequel l'agent de communication est émetteur d'un message de signalisation initial.
La figure 5 schématise un dialogue subséquent à l'enregistrement dans lequel l'agent de communication est récepteur d'un message de signalisation initial.

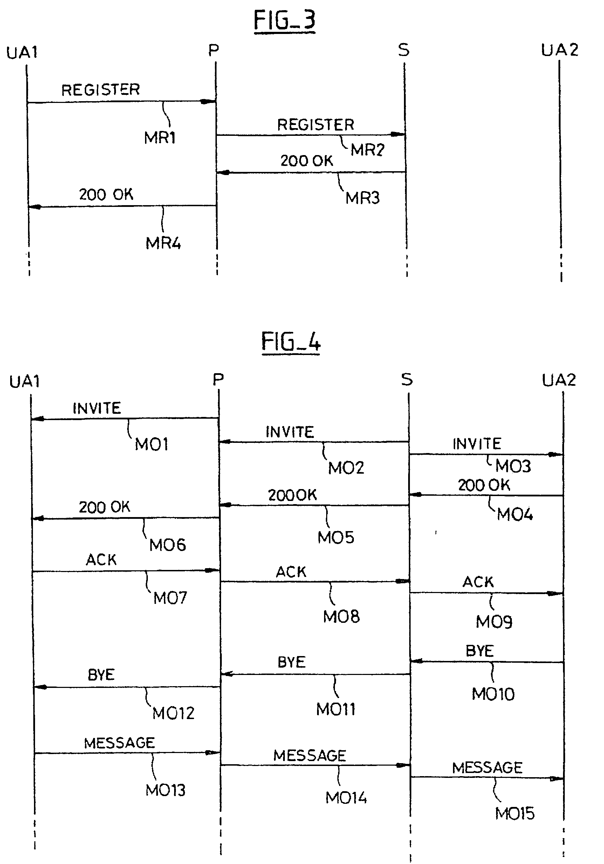

Afin de pouvoir être connu d'un réseau, un agent de communication doit tout d'abord s'enregistrer. Il transmet pour cela un message d'enregistrement « Register » à son élément de signalisation de sortie (« *outbound proxy* »). Il s'agit du message MR1 de la figure 3.

Sur cette figure, chaque ligne verticale représente un acteur de la signalisation important pour comprendre l'invention. Les acteurs représentés sur cette figure 3 correspondent à ceux représentés sur la figure 1.

Par soucis de clarté, les acteurs ne jouant pas de rôle actif ou majeur dans la présente invention n'ont pas été mentionné sur cette figure, mais il est évident pour l'homme du métier qu'un réseau de communication réel comporte un grand nombre d'éléments de signalisations (« proxies », B2BUA, etc.). L'architecture IMS en spécifie elle-même un assez grand nombre.

Les flèches horizontales correspondent aux messages de signalisation échangés entre les acteurs.

Comme précisé précédemment, l'élément de signalisation P est un élément intermédiaire de sortie « *Outbound proxy* » ou B2BUA. Dans le cadre d'une architecture IMS conforme aux standards issus du 3GPP et/ou de TISPAN, il peut s'agir d'un élément de signalisation mettant en oeuvre les fonctions de P-CSCF.

Un élément de signalisation P est représenté sur la figure 2. Il possède une première interface INT1 vers l'agent UA1, et une seconde interface INT2 vers un ou plusieurs autres éléments de signalisation.

Dans l'exemple, cet autre élément de signalisation est l'élément de signalisation S. Celui-ci peut être un proxy SIP. Il peut mettre en oeuvre une fonction de « registrar » selon le RFC 3261, ou celle de SLF (« *Subscriber Location Function* »). Dans le cadre d'une mise en oeuvre conforme à l'architecture IMS, cet élément de signalisation S peut implémenter les fonctions de S-CSCF (*Serving-Call Session Control Function*).

L'élément de signalisation P comporte en outre des moyens de traitement, ou processeur, TRT, pour modifier des entêtes de messages de signalisation reçus sur l'une des deux interfaces avant retransmission à partir de l'autre de ces deux interfaces. Typiquement, donc, l'élément de signalisation modifie certains entêtes des messages reçus de l'agent UA1 avant de les retransmettre vers l'élément de signalisation S, et, réciproquement, modifie certaines entêtes des messages reçus de ce dernier, avant de les retransmettre vers l'agent UA1.

Les entêtes modifiés et la façon de les modifier sont indiqués par le RFC 3261 ou par d'outres RFC de l'IETF. Hormis ceux importants pour comprendre l'invention, ces mécanismes ne sont pas décrits ici mais sont à la portée de l'homme du métier.

Selon l'invention, lorsque l'élément de signalisation P reçoit le message MR1 sur sa première interface INT1, le processeur copie les données contextuelles dans l'entête « path » du message de signalisation MR2 transmis à partir de la seconde interface vers l'élément de signalisation S.

Ces données contextuelles peuvent être contenues dans le message d'enregistrement MR1 reçu ou bien déterminées à partir de lui (par exemple, utilisation de IPSEC), ou encore récupérées depuis une base de profiles d'utilisateurs.

Ces données contextuelles peuvent être tout type de données que l'on souhaite que l'élément de signalisation P puisse avoir à disposition. Conformément au protocole SIP, il doit s'agir d'une chaîne de caractères codés en base 64, mais il peut être mis en oeuvre des mécanismes d'encodage permettant de transmettre des objets binaires, du code exécutable etc. en tant que données contextuelles.

À la réception du message de signalisation MR2, l'élément de signalisation S mémorise le contenu de l'entête « Path » conformément au paragraphe 5.3 du RFC 3327 de l'IETF, intitulé « *Session Initiation Protocol (SIP) Extension Header Field for Registering Non-Adjacent Contacts* ». Ces données contextuelles font parties du registre (ou « *registrar* » selon le vocabulaire en langue anglaise en usage) et sont associés à l'agent UA1.

Conformément au RFC 3608 intitulé « *Session Initiation Protocol (SIP) Extension Header Field for Service Route Discovery During Registration* », l'élément de signalisation S répond à l'élément de signalisation P par la transmission d'un message de réponse MR3 comportant un entête « Service-Route ». Cet entête permet de diriger les requêtes subséquentes selon un chemin prédéfini.

Il conserve en outre l'entête « Path » reçu, ainsi que les données contextuelles qu'il contient.

Le message de réponse MR3 peut être un message de réponse positive de la série « 2xx » telle que spécifiée dans le paragraphe 21.2 du RFC 3261 de l'IETF. Il peut notamment s'agir d'un message de signalisation « 200 Ok ».

Seul un élément de signalisation mettant en oeuvre une fonction de « registre » peut insérer un tel entête « Service-route ». Si le message d'enregistrement « Register » traverse plusieurs éléments de signalisation de ce type, plusieurs entêtes « Service-route » seront insérés dans le message de réponse « 200 Ok ».

Lorsque l'élément de signalisation P reçoit ce message MR3 sur son interface INT2, le processeur copie les données contextuelles contenues dans l'entête « Path » vers le premier entête « Service-route » du message MR4 transmis à l'agent UA1 à travers l'interface INT1.

La figure 4 peut être une suite possible au scénario d'enregistrement qui vient d'être décrit. Elle suppose que l'agent de communication UA1 transmette un nouveau message de signalisation MO1 à l'élément de signalisation P.

Ce nouveau message de signalisation MO1 est un message initial qui créé un nouveau dialogue (comme les messages « Invite », « Subscribe », « Notify »...) ou pas (messages « Publish », « Message »...).

Dans l'exemple de la figure 4, le message MO1 est un message « Invite » permettant l'initialisation d'une session multimedia avec l'agent UA2. L'invention n'est toutefois pas dépendante d'un type de message particulier.

Selon le RFC 3608, les entêtes « Service-route » doivent être utilisés par l'agent UA1 pour construire les entêtes « Route » afin transmettre tout nouveau message de signalisation initial vers le réseau de communication. Ces entêtes « Service-route » contenant les données contextuelles, celles-ci sont transmises à l'élément de signalisation P qui peut ainsi en disposer. Cette transmission par l'agent est transparente pour celui-ci, et n'engendre aucune modification de son architecture ou de son logiciel, puisqu'il lui suffit d'être conforme aux mécanismes spécifiés par le RFC 3608.

A la réception de ce message MO1, le processeur de l'élément de signalisation P peut récupérer les données contextuelles contenues dans l'entête « Route » de ce message. L'élément de signalisation P traite le message entrant MO1 et le retransmet sur sa seconde interface INT2 sous la forme d'un message sortant M02. Il peut modifier certains entêtes ainsi que spécifiés par les différents RFC définissant le protocole SIP et le comportement des éléments de signalisation.

Parmi ces modifications, le processeur P copie dans un entête « Record-route » de ce message de signalisation sortant M02, les données contextuelles précédemment récupérées.

L'entête « Record-route » permet à chaque élément intermédiaire de spécifier qu'il devra être sur le chemin de tout message de signalisation de la session.

Selon un mode de réalisation de l'invention, les données contextuelles peuvent être insérées dans un entête « Route » ou « Record-Route », en les séparant du reste des informations par un point-virgule.

Le message de signalisation M02 est transmis à l'élément de signalisation S, jouant le rôle de « registre » ou de S-CSCF.

Selon le RFC 3261, celui-ci ajoute un nouvel entête « Record-Route » indiquant son adresse, mais conserve l'entête « Record-Route » existant, inséré par l'élément de signalisation P et contenant les données contextuelles. Puis, il transmet le message M03 ainsi modifié à l'agent de communication appelé UA2.

Conformément au RFC 3261, l'agent UA2 transmet un message de réponse « 200 Ok » à la réception de ce message. Ce message M04 contient un entête « Record route » identique à celui reçu, et comportant donc les données contextuelles.

Ce message M04 est transmis à l'élément de signalisation S. Celui-ci le retransmet à l'élément de signalisation P (référencé MO5 sur la figure 4) qui le transmet à son tour à l'agent de communication UA1 (référencé MO6).

L'agent UA1 transmet alors un message de signalisation « ACK », M07. Comme pour tout message de signalisation subséquent émis par l'agent UA1 et appartenant au dialogue initié par le message MO1, il réutilise l'entête « Record-route » reçu afin de le copier dans le premier entête « Route » inséré dans le message transmis M07. Les informations supplémentaires, telles les données contextuelles, sont également copiés selon les spécifications du RFC 3261.

Ce message M07 est transmis à l'élément de signalisation P, qui peut ainsi disposer des données contextuelles.

Il supprime le premier entête «Route» et transmet le message ainsi modifié MO8 vers l'élément de signalisation S, qui à son tour, le transmet vers l'agent de communication UA2 (message référencé M09).

L'agent de communication UA2 répond alors par un message « Bye » MO10. Conformément au RFC 3261, il réutilise l'entête « Record-route » reçu et mémorisé précédemment pour construire l'entête « Route » du message MO10.

Le message « Bye » MO10 est transmis à l'élément de signalisation S, qui le transmet à l'élément de signalisation P après avoir ôté le premier entête « Route ». Le message résultant MO11 transmis à l'élément P contient donc les données contextuelles.

L'élément de signalisation P retire à son tour le premier entête « Route », et transmet le message résultant MO12 à l'agent de communication UA1. Ce message de signalisation MO12 ne contient plus les données contextuelles et met fait au dialogue SIP initié par le message de signalisation MO1.

Dans l'exemple illustré par la figure 4, l'agent de communication UA1 émet un nouveau message MO13. Il s'agit d'un message « Message » ne requérant pas l'établissement d'un dialogue SIP et transmette un message instantané (« *Instant Messaging* ») destiné à l'agent de communication UA2.

Selon le RFC 3606, l'agent de communication utilise les informations contenues dans l'entête « Service-Route » reçu lors de la phase d'enregistrement (message MR4 de la figure 3), pour construire l'entête « Route » de ce message MO13.

Par conséquent, l'entête « Route » contient les données contextuelles, permettant ainsi à l'élément de signalisation P d'en disposer.

Le message « Message » est ensuite transmis à l'élément de signalisation S (message référencé MO14) puis à l'agent destinataire UA2.

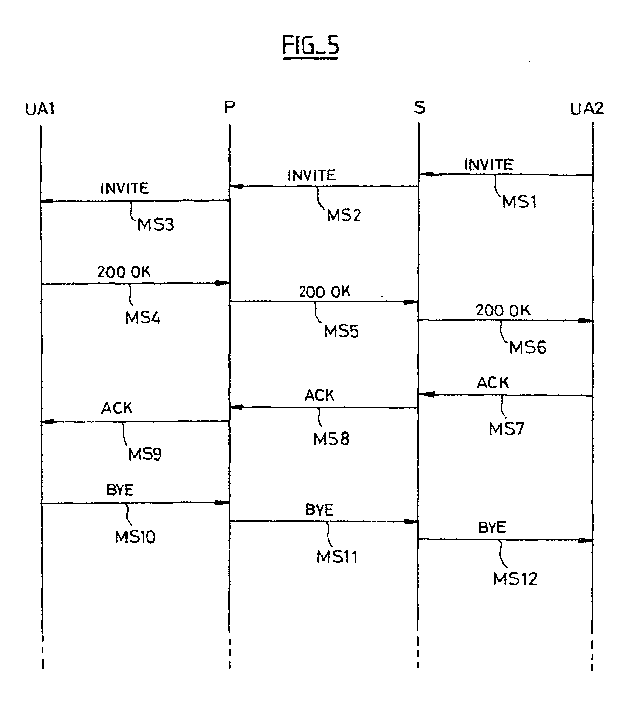

La figure 5 illustre la situation où l'agent de communication UA1 est destinataire de la requête initiale. Elle fait suite à une phase d'enregistrement comme celle décrite en liaison avec la figure 3.

L'agent de communication UA2 transmet un message « Invite » MS1 qui parvient à l'élément de signalisation S.

Conformément au RFC 3608, cet élément de signalisation incorpore dans ce message de signalisation MS1 un entête « Route » contenant les informations reçues dons l'entête « Path » du message d'enregistrement MR1 lors de la phase d'enregistrement illustrée par la figure 3.

L'élément de signalisation S transmet le message MS2, ainsi modifié, à l'élément de signalisation P.

Selon l'invention, à la réception d'un message de signalisation initial sur l'un de ses interfaces (ici l'interface INT2), le processeur TRT de l'élément de signalisation P copie les données contextuelles contenues dans le premier entête « Route » du message MS2 vers un entête « Record-Route » du message de signalisation MS3 transmis à partir de l'autre interfaces (ici l'interface INT1) vers l'agent de communication destinataire UA1.

Dons son message de réponse MS4 « 200 OK », l'agent de communication UA1 reprend l'entête « Record-Route » reçu, conformément au RFC 3261 de l'IETF. Ce message MS4 est transmis à l'élément de signalisation P qui peut ainsi disposer des données contextuelles, contenues dans cet entête.

L'élément de signalisation P transmet ensuite ce message « 200 OK » à l'élément de signalisation S qui le retransmet à l'agent de communication émetteur UA2 (messages référencés MS5 et MS6 sur la figure 5). Le message MS4 est reçu par l'interface INT1 de l'élément de signalisation P et traité par le processeur TRT qui peut éventuellement modifier certains entêtes (entêtes « VIA »...). Le message MS5 «200 OK» est transmis à partir de l'interface INT2.

Classiquement, celui-ci y répond par un message de signalisation « ACK ». Ce message MS7 réutilise l'entête « Record-Route » reçu dans le message MS6 en tant qu'entêtes « Route », conformément au RFC 3261. L'entête « Route » contient donc les données contextuelles.

Le message MS7 « ACK » est transmis à l'élément de signalisation S qui à son tour le transmet à l'élément de signalisation P qui le reçoit par son interface INT2 (message MS8 sur la figure 5). L'élément de signalisation S retire un entête « Route » (celui le concernant) mais laisse celui concernant l'élément de signalisation P, de sorte que le message MS8, reçu par ce dernier, contient toujours les données contextuelles.

Le message MS8 est ensuite traité par le processeur TRT et transmis vers l'agent UA1 à partir de l'interface INT1 sous la forme d'un message de signalisation MS9, ne contenant plus d'entête « Route ».

Pour tout message suivant, l'agent de communication UA1 réutilise l'entête « Record-Route » reçu pour construire un entête « Route ». Le message MS10 « Bye » vise à terminer le dialogue entre les deux agents de communication. Il contient un entête « Route » contenant donc les données contextuelles, et il est transmis à l'élément de signalisation P qui le reçoit sur son interface INT1.

Le processeur TRT peut disposer des données contextuelles, avant de retirer l'entête « Route » le concernant et de permettre l'émission du message MS11 ainsi modifié via l'interface INT2. Ce message de signalisation MS11 est transmis à l'élément de signalisation S, puis parvient à l'agent de communication UA2 (message MS12).

Aussi, lors de la réception de chaque message de signalisation, l'élément de signalisation P dispose des données contextuelles, contenues dans celui-ci. Il peut donc les utiliser pour traiter l'ensemble des messages de signalisation reçus.

L'invention a comme avantage de ne nécessiter que la modification de cet élément de signalisation P. Les agents de communication UA1, UA2 et les autres éléments de signalisation se bornent à respecter les spécifications des RFC émis par l'IETF.

Ces données contextuelles peuvent contenir les informations relatives au mécanisme IPSEC.

Dans le cadre d'une architecture IMS, un élément P-CSCF doit déterminer avant de transmettre un message de signalisation à un agent de communication UA, si celui-ci supporte le mécanisme IPSEC ou non. Si oui, l'élément P-CSCF doit utiliser une interface déterminée, notamment un port prévu à cet effet. Si non, une interface distincte que l'interface dédiée au mécanisme IPSEC doit être utilisée.

L'invention permet donc de mémoriser des données contextuelles indiquant si l'agent supporte ou non le mécanisme IPSEC, de sorte qu'à chaque fois que l'élément de signalisation P-CSCF doit transmettre un message de signalisation à l'agent, il peut utiliser les données contextuelles pour déterminer à partir de quelle interface le message doit être transmis.

Une autre utilisation de l'invention consiste en la mémorisation au sein de ces données contextuelles d'informations nécessaires pour la traversée d'équipements de traduction d'adresses de type NAT (« Network Address Translation »). Les travaux de l'IETF concernant le mécanisme « SIP Outbound » sont décrits à l'adresse http://tools.ietf.org/wg/sip/draft-ietf-sip-outbound et requiert la mémorisation d'informations par les éléments de signalisation.

Une autre application de l'invention est relative aux éléments de signalisation connectés à plusieurs réseaux de communication (« *multi-homed proxies* » en langue anglaise). Il dispose d'une interface vers chaque de ces réseaux (notamment d'une adresse IP différentes pour ces deux réseaux). Lorsqu'un agent de communication s'est enregistré auprès d'un de ces réseaux de communication, les autres messages de signalisation doivent également être émis vers ce même réseau.

Si cet outre message de signalisation appartient au même dialogue, il est aisé, selon l'état de la technique, de mémoriser une association entre l'identifiant du dialogue (entête « call-ID »...) et le réseau correspondant et d'utiliser cette association mémorisée pour acheminer les messages subséquents.

Si cet autre message n'appartient pas au même dialogue, l'invention permet de déterminer des données contextuelles identifiant le réseau de communication associé à un client. Ainsi, l'élément de signalisation sera apte à acheminer tout message de signalisation subséquent en utilisant les données contextuelles disponibles.

## Revendications

1. Elément de signalisation (P) disposant d'une première interface (INT1) permettant l'échange de messages de signalisation avec un agent de communication (UA1), et une seconde interface (INT2) permettant l'échange de messages de signalisation avec un autre élément de signalisation (UA2), lesdits messages de signalisation étant conformes au protocole SIP, et un moyen de traitement (TRT) pour modifier des entêtes desdits messages de signalisation reçus sur l'une desdites interfaces (INT1, INT2) avant retransmission à partir de l'autre desdits interfaces, **caractérisé en ce que** ledit moyen de traitement est prévu pour :
• à la réception d'un message de signalisation d'enregistrement sur ladite première interface, copier les données contextuelles dans l'entête « path » du message de signalisation transmis à partir de ladite seconde interface ;
• à la réception d'un message de signalisation sur ladite seconde interface, formant réponse audit message de signalisation d'enregistrement, copier les données contextuelles contenues dans l'entête «Path» de celui-ci vers le premier entête « Service-Route » du message de signalisation transmis à partir de ladite première interface ;
• à la réception d'un message de signalisation initial sur l'une desdites interfaces, copier les données contextuelles contenues dans un entête « Route » vers un entête « Record-Route » du message de signalisation transmis à partir de l'autre desdites interfaces.

2. Elément de signalisation selon la revendication précédente, dans lequel lesdits données contextuelles contiennent un identificateur d'un réseau de communication auquel ledit élément de signalisation est connecté.

3. Elément de signalisation selon l'une des revendications précédentes, dans lequel lesdites données contextuelles contiennent des informations nécessaires pour la traversée d'équipements de traduction d'adresses, notamment de type NAT.

4. Elément de signalisation selon l'une des revendications précédentes, dans lequel lesdites données contextuelles contiennent des informations relatives au mécanisme IPSEC.

## Claims

1. Signalling element (P) with a first interface (INT1) used to exchange signalling messages with a communication agent (UA1), and a second interface (INT2) used to exchange signalling messages with another signalling element (UA2), said signalling messages complying with the SIP protocol, and a processing means (TRT) to modify headers of said signalling messages received on one of said interfaces (INT1, INT2) before retransmission from the other one of said interfaces, **characterized in that** said processing means:
• on receiving a registration signalling message on said first interface, copy the contextual data in the "path" header of the signalling message sent from said second interface;
• on receiving a signalling message on said second interface, forming a response to said registration signalling message, copy the contextual data contained in the "Path" header from said header to the first "Service-Route" header of the signalling message sent from said first interface;
• on receiving an initial signalling message on one of said interfaces, copy the contextual data contained in a "Route" header to a "Record-Route" header of the signalling message sent from the other one of said interfaces.

2. Signalling element according to the previous claim, in which said contextual data contains an identifier for a communication network to which said signalling element is connected.

3. Signalling element according to one of the previous claims, in which said contextual data contains information required to traverse address translation equipment, namely NAT type equipment.

4. Signalling element according to one of the previous claims, in which said contextual data contains information relating to the IPSec mechanism.

## Patentansprüche

1. Zeichengabeelement (P) mit einer ersten Schnittstelle (INT1) für den Austausch von Zeichengabenachrichten mit einem Kommunikationsagenten (UA1), und einer zweiten Schnittstelle (INT2) für den Austausch von Zeichengabenachrichten mit einem anderen Zeichengabeelement (UA2), wobei die besagten Zeichengabenachrichten dem SIP-Protokoll entsprechen, und ein Verarbeitungsmittel (TRT) zum Verändern der Kopfteile der besagten auf einer der besagten Schnittstellen (INT1, INT2) empfangenen Zeichengabenachrichten vor der Weiterleitung ab der anderen der besagten Schnittstellen, **dadurch gekennzeichnet, dass** das besagte Verarbeitungsmittel für das Ausführen der folgenden Schritte vorgesehen ist;
• Bei Empfang einer Registrierungs-Zeichengabenachricht auf der besagten ersten Schnittstelle, Kopieren der Kontextdaten in den Kopfteil "Pfad" der ab der besagten zweiten Schnittstelle übertragenen Zeichengabenachricht;
• bei Empfang einer Zeichengabenachricht auf der besagten zweiten Schnittstelle, welche eine Antwort auf die besagte Registrierungs-Zeichengabenachricht darstellt, Kopieren der in deren Kopfteil "Pfad" enthaltenen Kontextdaten in den ersten Kopfteil "Service-Route" der ab der besagten ersten Schnittstelle übertragenen Zeichengabenachricht;
• bei Empfang einer ursprünglichen Zeichengabenachricht auf einer der besagten Schnittstellen, Kopieren der in einem Kopfteil "Route" enthaltenen Kontextdaten in einen Kopfteil "Record-Route" der ab der anderen der besagten Schnittstellen übertragenen Zeichengabenachricht.

2. Zeichengabeelement nach dem vorstehenden Anspruch, wobei die besagten Kontextdaten eine Kennung eines Kommunikationsnetzwerks, an welches das besagte Zeichengabeelement angeschlossen ist, enthalten.

3. Zeichengabeelement nach einem der vorstehenden Ansprüche, wobei die besagten Kontextdaten für die Traversierung von Adressumsetzungsvorrichtungen, insbesondere vom Typ NAT, erforderliche Informationen enthalten.

4. Zeichengabeelement nach einem der vorstehenden Ansprüche, wobei die besagten Kontextdaten Informationen in Bezug auf den IPSEC-Mechanismus enthalten.
